# EUROPÄISCHE PATENTSCHRIFT

(11) **EP 0 857 907 B1**
(45) Veröffentlichungstag und Bekanntmachung des Hinweises auf die Patenterteilung: **19.09.2001**
(21) Anmeldenummer: 98200138.0
(22) Anmeldetag: 20.01.1998
(51) Int. Cl.: F16L 55/033, F16L 3/133, F16L 3/11

(54) **Rohrschellenanordnung zum schwingungdämpfenden Befestigen einer Rohrleitung an einer Wand**
Pipe clamp assembly for vibration-damping mounting of a pipe to a wall
Ensemble collier de serrage pour le montage anti-vibration d'un tuyau à une paroi

(30) Priorität: 29.01.1997 NL 1005123
(43) Veröffentlichungstag der Anmeldung: 12.08.1998
(73) Patentinhaber: J. van Walraven B.V., 3641 RK Mijdrecht (NL)
(72) Erfinder: Van Walraven, Jan, 3641 GP Mijdrecht (NL)
(74) Vertreter: Boelsma, Gerben Harm, Ir.

(56) Entgegenhaltungen:
- EP-A- 0 582 354
- EP-A- 0 693 649
- DE-A- 4 228 961
- DE-U- 9 413 452
- FR-A- 2 220 738

## Beschreibung

Die Erfindung bezieht sich auf eine Rohrschellenanordnung wie definiert im ersten Teil des Anspruchs 1.

Eine derartige Rohrschellenanordnung ist in der EP-A-0 582 354 offenbart worden (siehe insbesondere Fig. 2). Bei dieser bekannten Rohrschellenanordnung handelt es sich um das schwingungsdämpfende Aufhängen eines etwa stehenden Fallrohres für Regenwasser und dergleichen an einer Wand. Dabei liegt die als Stützkragen um die zu befestigende Rohrleitung festgespannte zweite Rohrschelle mit dem unteren Randteil der zugehörigen, zwischen dem Schellenkörper und der Rohrleitung geklemmten Einlage lose an dem in axialer Richtung dämpfenden oberen Randteil der die Rohrleitung locker umfassenden Einlage der ersten Rohrschelle an, welche erste Rohrschelle zum übrigen die Funktion eines Führungsauges für die Rohrleitung erfüllt.

Eine ähnliche Rohrschellenanordnung, ebenfalls nach dem ersten Teil des Anspruchs 1, ist in der DE-A-4 228 961 offenbart worden. In diesem Dokument wird darauf hingewiesen, dass sich die zweite Einlage mit der von dieser umspannten Rohrleitung in radialem Sinne mit bezug auf die erste Rohrschelle und die erste, als Auflagestütze dienende Einlage verschieben kann, sodass die Gefahr besteht, dass die zweite, als Tragkragen dienende Einlage nicht über den ganzen Umfang an der Stirnfläche der ersten Einlage anliegt. Im Dokument wird daher vorgeschlagen, die aufeinanderliegenden Stirnflächen der beiden Einlagen in radialem Sinne so zu bemessen, dass auch bei einer exzentrisch zur Rohrschelle mit der ersten Einlage angeordneten Rohrleitung gewährleistet ist, dass die beiden Einlagen über den gesamten Umfang aufeinander anliegen.

Die Erfindung beabsichtigt eine verbesserte Rohrschellenanordnung und zwar insbesondere eine verbesserte Einlage dafür zu schaffen.

Erfindungsgemäß wird dieser Zweck erreicht durch die im zweiten Teil des Anspruchs 1 genannten Merkmale.

Ein Vorteil einer Rohrschellenanordnung mit einer solchen zusammengesetzten Einlage ist, daß sie zu einer wirksamen Zentrierung der zu befestigenden Rohrleitung relativ zur an der Wand befestigten und für die erwünschte schwingungsdämpfende Wirkung Sorge tragende (erste) Rohrschelle beiträgt.

Eine praktische Ausbildungsform der erfindungsgemäßen Rohrschellenanordnung weist die in Anspruch 2 genannten Merkmale auf.

Die L-formige Längsschnittsform bedeutet, daß die zweite Rohrschelle einfach in axsialer Richtung über das freie Ende der zugehörigen Einlage angebracht werden kann, wodurch die Montagearbeiten an den Befestigungsstellen der aufzuhängenden Rohrleitung vereinfacht werden.

Eine besondere Ausbildungsform der erfindungsgemäßen Rohrschellenanordnung ergibt sich durch die Merkmale des Anspruchs 6.

Diese Ausführungsform eignet sich insbesondere zum schwingungsdämpfenden Aufhängen einer etwa waagerechten Rohrleitung an einer Stelle längs der Wärmedehnungen ausgesetzten Leitung, wo ein sogenannter "Festpunkt" gebildet werden muß. In diesem Zusammenhang wird auf die EP-A-0 693 649 hingewiesen.

Weitere Merkmale und Vorteile der Erfindung werden unten anhand der Zeichnung mit zwei Ausführungsbeispielen näher erläutert.
Fig. 1 zeigt, für die Hälfte in Ansicht und für die andere Hälfte in Längsschnitt eine an einer Mauer befestigte Rohrschellenanordnung nach der Erfindung, in Kombination mit einem von dieser getragenen Fallrohr;
Fig. 2 zeigt einen Querschnitt in vergrößertem Maßstab, der in der Rohrschellenanordnung nach Fig. 1 angewandten Einlage;
Fig. 3 zeigt einen Querschnitt einen für eine Anordnung von drei nebeneinander auf einer zu befestigenden Rohrleitung angebrachten Rohrschellen geeigneten Einlage und
Fig. 4 zeigt eine Variante der Einlage nach Fig. 3.

In der Zeichnung ist mit 1 eine Rohrschelle eines bekannten Typs bezeichnet. Diese Rohrschelle weist einen in der Regel aus Metall geformten ringförmigen Schellenkörper 2 auf, dessen in der Zeichnung am Vordergrund liegenden, zu Flanschen 3, 4 umgebogenen Enden 3, 4 mit Hilfe einer Klemmschraube 5 zusammengezogen werden können, so daß die Schelle mehr oder weniger um eine aufzuhängende Rohrleitung 6 festgeklemmt werden kann.

Der ringförmige Schellenkörper 2 besteht öfters aus zwei Hälften, die im gezeigten Beispiel hinter der Rohrleitung 6 gelenkig ineinander greifen. Eine zweite Flanschverbindung an jener Stelle ist jedoch auch möglich.

Auf der Außenseite (eines der beiden Teile) des Schellenkörpers 2 ist, z.B. durch Schweißen eine Mutter 7 vorgesehen, mit deren Hilfe die Rohrschelle auf dem außeren Ende einer in der tragenden Wand 8 befestigten Gewindestange 9 geschraubt sitzt.

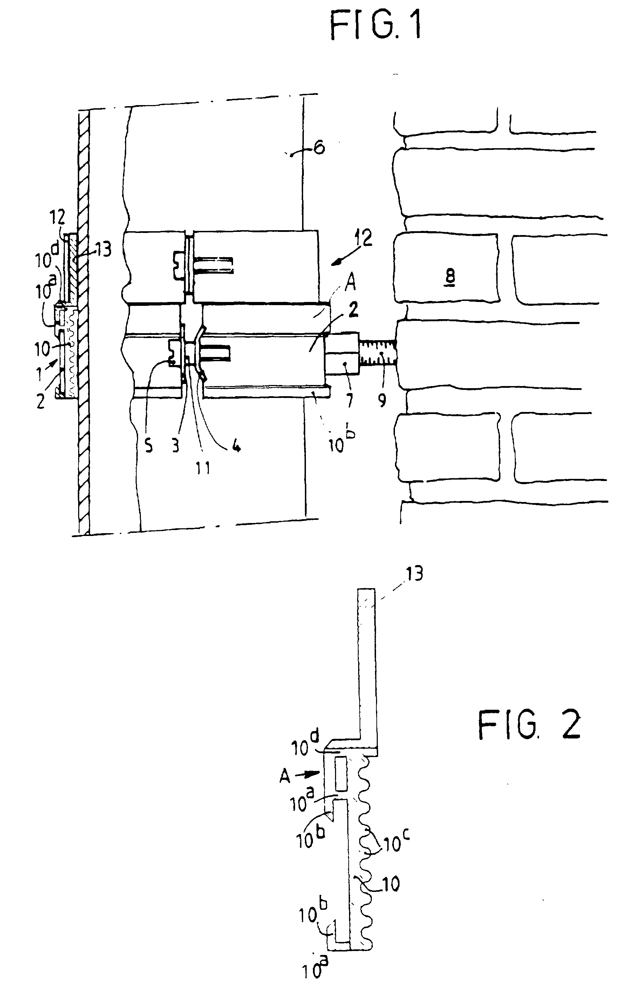

Die Rohrschelle 1 ist mit einer sich über die Innenumfangsfläche des Schellenkörpers erstreckenden Einlage 10 versehen, die ebenfalls aus zwei Hälften bestehen kann. Diese Einlage (bzw. jede Einlagehälfte), wovon Fig. 2 einen vergrößerten Längsschnitt zeigt, besteht aus einem Streifen aus biegsamem Gummi, oder derartigem Material. Dieser Gummistreifen greift mit aufstehenden und nach innen gerichteten Seitenrandteilen 10a, bzw. 10b um die Stirnränder des Schellenkörpers 2 und ist ferner an der der aufzuhängenden Rohrleitung zugewendeten Seite mit in montiertem Zustand kreisrunden Rippen 10c versehen.

Die eigentliche Einlage 10 und der obere, nach innen gerichtete Seitenrandteil 10b erstrecken sich in Aufwärtsrichtung, an dem oberen Stirnrand des Schellenkörpers 2 vorbei, bis zu einem seitlich zu dem aufstehenden Randteil 10a und dem Schellenkörper versetzt liegenden Seitenrandteil 10d. Hierdurch ist ein in axialer Richtung federnder und schwingungsdämpfender Hohlrandbereich A gebildet.

Mit der so ausgebildeten Einlage 10 ist die Rohrschelle 1 verhältnismäßig "locker" um die (z.B. aus Kunststoff geformte) Rohrleitung 6 zusammengezogen, d.h. nicht so fest, daß ein Hindurchsinken der Rohrleitung durch die Klemmschelle unter Einfluß des Rohrgewichtes verhindert werden würde. Im Prinzip gibt es dabei kaum oder keinen Kontakt zwischen den Rippen 10c und der Rohrleitung 6. Zur Realisierung einer solchen lockeren Umspannung der Rohrleitung 6 kann zwischen den Flanschen 3 und 4 ein Distanzring 11 vorgesehen werden, wie an sich aus der EP-A-0387966 bekannt ist.

Das Hindurchfallen der Rohrleitung 6 durch die Rohrschelle 1 wird dadurch verhindert, daß um die Rohrleitung, oberhalb der Rohrschelle 1 ein Kragen gebildet ist, welcher auf dem schwingungsdämpfenden Randgebiet A der Einlage 10 aufliegt. Dieser Kragen wird von einer zweiten Rohrschelle 12 gebildet, die von der Wand 8 freibleibt und auf der Rohrleitung 6 festgespannt ist. Die zweite Rohrschelle 12 arbeitet mit einer Einlage 13 zusammen, die von einer härteren Art als die Einlage 10 sein kann und welche mit der Rohrschelle 12 um die Rohrleitung 6 festgespannt wird. Die Abmessungen des Schellenkörpers der zweiten Rohrschelle 12 können denjenigen der ersten Rohrschelle 1 entsprechen. Beim Festspannen der Rohrschelle 12 um die Rohrleitung 6 wird jedoch kein Distanzring 11 verwendet.

Die Einlage 13 bildet mit der Einlage 10 ein Ganzes. Dabei liegt die Einlage 13 mit der der Rohrleitung 6 zugewendeten glatten Oberfläche relativ zur entsprechenden Oberfläche (bzw. den Rippen 10c) der Einlage 10 nach innen versetzt.

Die Einlage hat einen L-förmigen Querschnitt, wobei das längere, aufstehende Bein des "L" die eigentliche Einlage bildet und das kürzere, nach außen gerichtete Bein die Verbindung mit dem federnden Randgebiet A der Einlage 10 bildet.

Nachdem die Rohrschelle 1 angebracht worden ist, und die Rohrleitung so in richtigem Abstand von der tragenden Wand positioniert worden ist, kann die zweite Rohrschelle 12 einfach von oben her um die Einlage 13 geschoben werden und anschließend festgeklemmt werden. Die über die zusammengepreßte Einlage 13 auf die zweite Rohrschelle 12 übergetragenen Rohrschwingungen werden vom schwingungsdämpfenden Randgebiet A der Einlage 12 absorbiert, so daß der Übertragung von Schwingungen auf die erste Rohrschelle 10 und über die Rohrschelle und die Befestigungsteile 7 und 8 auf die Wand entgegengewirkt wird.

Eine Besonderheit der zusammengesetzten Einlage nach Fig. 2 ist noch darin zu ersehen, daß der untere, von der Einlage 10 aufstehende und nach innen umgebogene Seitenrandteil 10a, 10b aus einem Material (Gummi) geformt ist, das eine höhere Festigkeit als dasjenige der übrigen Einlage 10 aufweist. Hierdurch wird der betreffende Rand des Schellenkörpers 2 kräftiger umfaßt und wird sich die Einlage nicht leicht vom Schellenkörper 2 lösen, wenn die Rohrleitung 6 dazu neigt, einen (kleinen) Winkel relativ zur Achse des Rohrschellensatzes zu bilden.

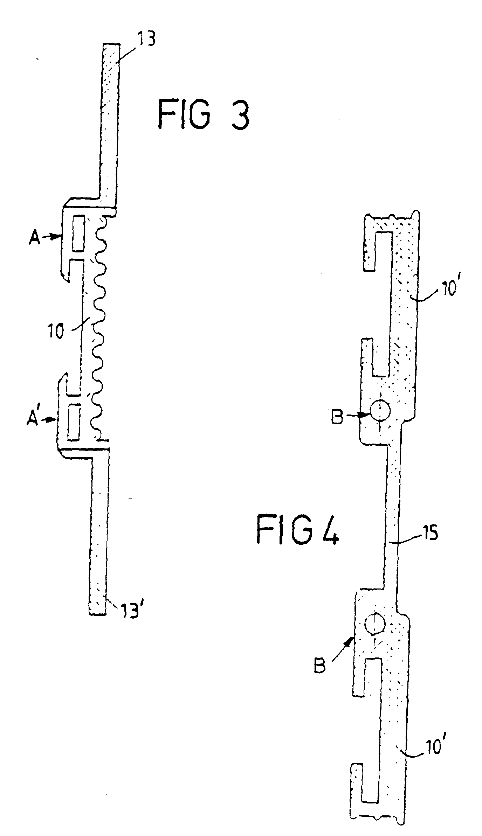

In der Ausbildung nach Fig. 3 handelt es sich um eine zusammengesetzte Einlage für eine Anordnung von drei untereinander, bzw. nebeneinander auf einer zu befestigenden Rohrleitung anzubringenden Rohrschellen. Diese Ausführung unterscheidet sich von derjenigen nach Fig. 2 dadurch, daß an den Seitenrändern des zentralen Einlagenabschnitts 10 ein schwingungsdämpfendes Randgebiet A geformt ist. Diese Ausführung ist u.a. von Nutzen, wenn in einer Situation wie diejenige nach Fig. 1 etwaige, nach oben gerichtete Kräfte auf der Rohrleitung 6 aufgenommen werden sollen. Dabei wird die untere Rohrschelle in der Anordnung von drei auf die gleiche Weise wie die obere Rohrschelle um die Rohrleitung festgespannt.

Die alternative Ausführung nach Fig. 4 ist ebenfalls für eine Anordnung von drei nebeneinander auf einer Rohrleitung anzubringenden Rohrschellen geeignet. Es handelt sich hier um zwei im Abstand voneinander angeordneten Einlagen 10' bekannter Art, von denen die einander zugekehrten Randgebiete B hohl und damit schwingungsdämpfend ausgebildet sind. Die beiden Einlagen 10' sind dabei durch einen als Einlage für eine mittlere Rohrschelle dienenden Verbindungsstreifen 15 miteinander verbunden, von welchem Streifen die der Rohroberfläche (mit Spiel) zugewendete Oberfläche relativ zur Spannfläche der Einlagen 10' nach außen (in der Zeichnung nach links) versetzt liegt. Diese Ausführung ist insbesondere für Verwendung bei in einer liegenden Position aufzuhängenden Rohren, wie nach der obengenannten EP-A-0693649, geeignet und kann aus einer einzigen biegsamen Art Gummmi oder derartigem elastomerem Material bestehen.

Die gezeigte Ausführung bildet dabei die Möglichkeit, zunächst die beiden "Seitenschellen" mit der gezeigten zusammengesetzten Einlage vorzumontieren und als letzter Schritt die lose Schellenhälfte der mittleren Rohrschelle anzubringen und mit der bereits an der Wand befestigten Schellenhälfte zu verbinden.

## Patentansprüche

1. Rohrschellenanordnung zum schwingungsdämpfenden Befestigen einer Rohrleitung an einer Tragwand, umfassend zwei Rohrschellen der Art, bestehend aus einem zu einem gespalteten ringförmigen Schellenkörper mit zusammenziehbaren Flanschen gebogenen Materialstreifen, wobei der eine Schellenkörper zur unmittelbaren Befestigung an der Wand eingerichtet ist und mit einer die Leitung bei geschlossener Rohrschelle mit Spiel umgebenden Einlage versehen ist, von welcher Einlage mindestens einer der um die Stirnränder des Schellenkörpers greifenden Seitenrandteile in axialer Richtung schwingungsdämpfend ausgebildet ist, während der Schellenkörper der zweiten Rohrschelle dazu eingerichtet ist, in Kombination mit der zugehörigen Einlage wie ein Stützkragen um die Rohrleitung festgeklemmt zu werden, welcher Stützkragen am schwingungsdämpfend ausgebildeten Randteil der Einlage der ersten Rohrschelle anzuliegen kommt, **dadurch gekennzeichnet, daß** die Einlage der zweiten Rohrschelle mit derjenigen der ersten Rohrschelle aus einem Stück gebildet ist, und zwar in der Weise, daß die Einlage der zweiten Rohrschelle mit ihrer der Rohrleitung zugewendeten Oberfläche relativ zur Oberfläche der Einlage der ersten Rohrschelle nach innen versetzt liegt.

2. Rohrschellenanordnung nach Anspruch 1, **dadurch gekennzeichnet, daß** der zur zweiten Rohrschelle gehörige Einlagenabschnitt einen etwa L-förmigen Längsschnitt aufweist, wobei das nach außen gerichtete Kurzbein des L am axial dämpfenden Randteil des zur ersten Rohrschelle gehörigen Einlagenabschnitts anschließt.

3. Rohrschellenanordnung nach Ansprüchen 1 - 2, **dadurch gekennzeichnet, daß** der zur zweiten Rohrschelle gehörige Einlagenabschnitt glatt ausgebildet ist.

4. Rohrschellenanordnung nach Ansprüchen 1 - 3, **dadurch gekennzeichnet**, daß der zur zweiten Rohrschelle gehörige Einlagenabschnitt eine größere Härte als das Material des zur ersten Rohrschelle gehörigen Einlagenabschnitts hat.

5. Rohrschellenanordnung nach Ansprüchen 1 - 4, **dadurch gekennzeichnet, daß** der von der Einlage (13) der zweiten Rohrschelle (12) abgekehrte Seitenrand der Einlage (10) der ersten Rohrschelle (1), welcher Seitenrand einen von jener Einlage abstehenden und einen nach innen umgebogenen Randteil (10a, 10b) umfaßt, eine größere Härte aufweist.

6. Rohrschellenanordnung nach Ansprüchen 1 - 4, **dadurch gekennzeichnet, daß** beim Vorhandensein einer dritten Rohrschelle, die wie die zweite Rohrschelle in Kombination mit der zugehörigen Einlage wie ein Stützkragen um die Rohrleitung gespannt ist und am ebenfalls in axialer Richtung schwingungsdämpfend ausgebildeten zweiten Seitenrandteil der Einlage der ersten Rohrschelle anliegt, die zugehörige Einlage mit derjenigen der ersten Rohrschelle aus einem Stück gebildet ist, und zwar ebenfalls in der Weise, daß der Einlagenabschnitt der dritten Rohrschelle mit der der Rohrleitung zugekehrten Oberfläche relativ zu der Oberfläche des Einlagenabschnittes der ersten Rohrschelle nach innen versetzt liegt.

7. Einlage für um eine Rohrleitung zu befestigende Rohrschellen einer Rohrschellenanordnung nach den Ansprüchen 1-6, mit
einem ersten streifenförmigen Einlageteil (10) zum Anliegen auf der Innenumfangsfläche der ersten, mit Spiel um die Rohrleitung (6) anzubringenden Rohrschelle (1), welcher Einlageteil (10) Seitenrandteile (10a, 10b) aufweist, welche um die Stirnränder des ringförmigen Schellenkörpers der ersten Rohrschelle (1) greifen können, wobei wenigstens ein Seitenrandteil in axialer Richtung (bei A) schwingungsdämpfend ausgebildet ist, und
einem zweiten streifenförmigen Einlageteil (13) zum Anliegen auf der Innenseite der zweiten, um die Rohrleitung festzuspannenden Rohrschelle (12),
**dadurch gekennzeichnet, dass** sich der zweite Einlageteil (13) am axial dämpfenden Randteil (A) des ersten Einlageteils (10) anschliesst und mit dem ersten Einlageteil (10) aus einem Stück gebildet ist, wobei die der Rohrleitung (6) zuzuwendende Oberfläche des zweiten Einlageteils (13) relativ zur Oberfläche des ersten Einlageteils (10) zur Rohrleitung hin versetzt liegt.

## Claims

1. A pipe clip arrangement for vibration-damping fixing of a pipe to a support wall, including two pipe clips of the kind comprising a metal strip which is curved to form a split annular clip body with contractible flanges, wherein the one clip body is designed for direct fixing to the wall and is provided with an insert surrounding the pipe with clearance when the pipe clip is closed, of which insert at least one of the side edge portions which grips around the edges of the clip body is adapted to be vibration-damping in the axial direction while the clip body of the second pipe clip is designed to be clamped fast around the pipe in combination with the associated insert like a support collar, which support collar comes to bear against the edge portion which is of a vibration-damping nature of the insert of the first pipe clip, **characterised in that** the insert of the second pipe clip is formed from one piece with that of the first pipe clip, more specifically in such a way that the insert of the second pipe clip is disposed with its surface that is towards the pipe displaced inwardly relative to the surface of the insert of the first pipe clip.

2. A pipe clip arrangement according to claim 1 **characterised in that** that the insert portion which is associated with the second pipe clip is of a substantially L-shaped longitudinal section, wherein the outwardly directed short leg of the L-shape adjoins the axially damping edge portion of the insert portion which is associated with the first pipe clip,

3. A pipe clip arrangement according to claims 1 and 2 **characterised in that** the insert portion associated with the second pipe clip is smooth.

4. A pipe clip arrangement according to claims 1 to 3 **characterised in that** the insert portion associated with the second pipe clip is of a greater hardness than the material of the insert portion associated with the first pipe clip.

5. A pipe clip arrangement according to claims 1 to 4 **characterised in that** the side edge of the insert (10) of the first pipe clip (1), which side edge is remote from the insert (13) of the second pipe clip (12) and includes edge portions (10a, 10b) projecting from said insert and bent over inwardly, is of a greater hardness.

6. A pipe clip arrangement according to claims 1 to 4 **characterised in that** when there is a third pipe clip which like the second pipe clip is clamped in combination with the associated insert like a support collar around the pipe and bears against the second side edge portion of the insert of the first pipe clip, said second side edge portion also being adapted to be vibration-damping in the axial direction, the associated insert is formed from one piece with that of the first pipe clip, more specifically also in such a way that the insert portion of the third pipe clip is disposed with the surface that is towards the pipe displaced inwardly relative to the surface of the insert portion of the first pipe clip.

7. An insert for pipe clips of a pipe clip arrangement, which are to be fixed around a pipe, according to claims 1 to 6, comprising
a first strip-shaped insert portion (10) for bearing against the inside peripheral surface of the first pipe clip (1) which is to be fitted with play around the pipe (6), which insert portion (10) has side edge portions (10a, 10b) which can grip around the edges of the annular clip body of the first pipe clip (1), wherein at least one side edge portion is adapted to be vibration-damping in the axial direction (at A), and
a second strip-shaped insert portion (13) for bearing against the inside of the second pipe clip (12) which is to be clamped fast around the pipe,
**characterised in that** the second insert portion (13) adjoins the axially damping edge portion (A) of the first insert portion (10) and is formed from one piece with the first insert portion (10), wherein the surface of the second insert portion (13) which is to face towards the pipe (6), is displaced towards the pipe relative to the surface of the first insert portion (10).

## Revendications

1. Ensemble de collier de serrage pour la fixation anti-vibration d'une conduite sur une paroi porteuse, comprenant deux colliers de serrage de type connu. constitués d'une bande de matériau courbée en un corps de collier annulaire fendu à brides resserrables, l'un des corps de collier étant conçu pour la fixation directe sur la paroi et étant pourvu d'une garniture entourant avec jeu la conduite lorsque le collier de serrage est fermé, garniture dont au moins une des parties de bords latéraux s'engageant autour des bords frontaux du corps de collier est réalisée amortissant les vibrations en direction axiale, tandis que le corps de collier du deuxième collier de serrage est conçu pour être, en combinaison avec la garniture associée, serré à bloc autour de la conduite à la manière d'un collet d'appui, collet qui vient s'appliquer contre la partie de bord réalisée anti-vibration de la garniture du premier collier de serrage,
**caractérisé en ce que** la garniture du deuxième collier de serrage est formée d'un seul tenant avec celle du premier collier de serrage, et ce de telle sorte que la surface de la garniture du deuxième collier de serrage qui est tournée vers la conduite est décalée vers l'intérieur par rapport à la surface de la garniture du premier collier de serrage.

2. Ensemble de collier de serrage suivant la revendication 1,
**caractérisé en ce que** le tronçon de garniture associé au deuxième collier de serrage possède une forme approximative de L en coupe longitudinale, la branche courte, dirigée vers l'extérieur, du L se raccordant à la partie de bord à amortissement axial du tronçon de garniture associé au premier collier de serrage.

3. Ensemble de collier de serrage suivant la revendication 1 ou 2, **caractérisé en ce que** le tronçon de garniture associé au deuxième collier de serrage est réalisé plat.

4. Ensemble de collier de serrage suivant l'une des revendications 1 à 3, **caractérisé en ce que** le tronçon de garniture associé au deuxième collier de serrage possède une plus grande dureté que le matériau du tronçon de garniture associé au premier collier de serrage.

5. Ensemble de collier de serrage suivant l'une des revendications 1 à 4, **caractérisé en ce que** le bord latéral de la garniture (10) du premier collier (1) de serrage qui est opposé à la garniture (13) du deuxième collier (12) de serrage, bord qui comprend une partie (10a) de bord partant en saillie de la garniture correspondante et une partie (10b) de bord recourbée vers l'intérieur, possède une plus grande dureté.

6. Ensemble de collier de serrage suivant l'une des revendications 1 à 4, **caractérisé en ce que**, en présence d'un troisième collier de serrage, qui comme le deuxième collier de serrage est serré autour de la conduite, en combinaison avec la garniture associée, à la manière d'un collet d'appui et s'applique contre la deuxième partie de bord latéral, réalisée pareillement amortissant les vibrations en direction axiale, de la garniture du premier collier de serrage, la garniture associée est formée d'un seul tenant avec celle du premier collier de serrage, et ce pareillement de telle sorte que la surface du tronçon de garniture du troisième collier de serrage qui est tournée vers la conduite est décalée vers l'intérieur par rapport à la surface du tronçon de garniture du premier collier de serrage.

7. Garniture pour des colliers de serrage, à fixer autour d'une conduite, d'un ensemble de collier de serrage suivant l'une des revendications 1 à 6, comportant
une première partie (10) de garniture en forme de bande, destinée à s'appliquer sur la face circonférentielle intérieure du premier collier (1) de serrage, à poser avec jeu autour de la conduite (6), laquelle partie (10) de garniture possède des parties (10a, 10b) de bords latéraux qui peuvent s'engager autour des bords frontaux du corps de collier de forme annulaire du premier collier (1) de serrage, au moins une partie de bord latéral étant réalisée amortissant les vibrations en direction axiale (en A), et
une deuxième partie (13) de garniture en forme de bande, destinée à s'appliquer sur la face intérieure du deuxième collier (12) de serrage, à serrer à bloc autour de la conduite,
**caractérisée en ce que** la deuxième partie (13) de garniture se raccorde à la partie (A) de bord à amortissement axial de la première partie (10) de garniture et est réalisée d'un seul tenant avec la première partie (10) de garniture, la surface de la deuxième partie (13) de garniture à tourner vers la conduite (6) étant décalée en direction de la conduite par rapport à la surface de la première partie (10) de garniture.
